# FASCICULE DE BREVET EUROPEEN

(11) **EP 3 605 750 B1**
(45) Date de publication et mention de la délivrance du brevet: **12.10.2022**
(21) Numéro de dépôt: 19188250.5
(22) Date de dépôt: 25.07.2019
(51) Int. Cl.: H01R 27/00, H01R 24/78, H02G 3/08, H02G 3/12, H02G 3/16, H02G 3/18, H01R 31/06, H01R 13/74, H01R 9/24, H01H 1/58

(54) **MÉCANISME D'APPAREILLAGE ÉLECTRIQUE ET APPAREILLAGE ÉLECTRIQUE ASSOCIÉ**
MECHANISMUS EINES ELEKTRISCHEN GERÄTS UND ENTSPRECHENDES ELEKTRISCHES GERÄT
MECHANISM FOR ELECTRICAL EQUIPMENT AND ASSOCIATED ELECTRICAL EQUIPMENT

(30) Priorité: 31.07.2018 FR 1857164
(43) Date de publication de la demande: 05.02.2020
(73) Titulaire: Legrand France, 87000 Limoges (FR); Legrand SNC, 87000 Limoges (FR)
(72) Inventeur: BRASSEAU, Boris, 87700 Saint Priest sous aixe (FR); DELMAS, Simon, 87400 La Geneytouse (FR)
(74) Mandataire: Jacobacci Coralis Harle

(56) Documents cités:
- GB-A- 2 551 952
- US-A- 3 970 772
- US-A- 4 657 334
- US-A1- 2010 227 484
- US-A1- 2012 231 652
- US-B1- 6 945 815

## Description

La présente invention concerne de manière générale le domaine des appareillages électriques, et en particulier des mécanismes d'appareillage électrique.

Elle concerne plus particulièrement un mécanisme d'appareillage électrique conforme au préambule de la revendication 1.

Elle concerne aussi un appareillage électrique comportant un tel mécanisme d'appareillage reçu dans un support d'appareillage.

### ARRIERE-PLAN TECHNOLOGIQUE

On connaît notamment du document EP2924815 un mécanisme d'appareillage tel que précité. Les broches de ce mécanisme d'appareillage qui font saillie de sa face arrière sont destinées à s'enficher dans des bornes de connexion électrique prévues dans une arche disposée à l'arrière d'un support spécifique d'appareillage.

Ainsi, un tel mécanisme d'appareillage ne peut être monté que dans un support d'appareillage prédéterminé, comportant ladite arche.

Cela contraint fortement l'utilisateur et empêche notamment le montage de ce mécanisme d'appareillage dans un support classique d'appareillage préexistant.

On connaît également du document US4657334 un mécanisme de prise téléphonique tel que le mécanisme d'appareillage précité. Les broches de ce mécanisme de prise téléphonique sont destinées à s'enficher dans les bornes de connexion d'un bornier de connexion relié au réseau téléphonique.

Ainsi, un tel mécanisme de prise téléphonique ne peut être relié au réseau téléphonique que via le bornier de connexion.

Cela contraint fortement l'utilisateur et empêche notamment de relier ce mécanisme de prise téléphonique directement aux fils du réseau téléphonique. Le document US6945815 B1 divulgue également le préambule de la revendication 1.

### OBJET DE L'INVENTION

Afin de remédier à l'inconvénient précité de l'état de la technique, la présente invention propose un mécanisme d'appareillage adapté à être connecté au réseau, soit classiquement directement via le raccordement de fils électriques, soit par enfichage de broches de connexion sur un bornier de connexion.

Plus particulièrement, on propose selon l'invention un mécanisme d'appareillage conforme à la revendication 1.

Ainsi, la partie de connexion électrique du mécanisme d'appareillage présente un double système de connexion : les bornes de connexion intégrées au mécanisme d'appareillage qui permettent une connexion classique aux fils d'alimentation électriques du réseau, et les broches de connexion qui permettent une connexion simple et sécurisée par enfichage dans des moyens de connexion intermédiaires tels qu'un bornier de connexion.

Cela permet de connecter le mécanisme d'appareillage à n'importe quel support d'appareillage, par exemple à un support d'appareillage classique, à fond ouvert, ou à un support d'appareillage spécifique fermé par un bornier de connexion.

D'autres caractéristiques non limitatives et avantageuses du mécanisme d'appareillage conforme à l'invention, prises individuellement ou selon toutes les combinaisons techniquement possibles, sont données dans les revendications 2 à 9.

L'invention propose également un appareillage électrique conforme à la revendication 10.

Selon une caractéristique avantageuse de cet appareillage électrique, le mécanisme d'appareillage est reçu de manière amovible dans ledit support d'appareillage.

### DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective arrière d'un premier mode de réalisation d'un mécanisme d'appareillage conforme à l'invention ;
- la figure 2 est une vue schématique en perspective éclatée du mécanisme d'appareillage de la figure 1 ;
- les figures 3 et 4 sont respectivement des vues schématiques en perspective arrière et avant de deux capuchons isolants dans lesquels sont destinées à être enfichées les broches de connexion du mécanisme d'appareillage de la figure 1 ;
- les figures 5 et 6 sont respectivement des vues schématiques en perspective arrière et avant d'un bornier de connexion dans lequel sont destinées à être enfichées les broches de connexion du mécanisme d'appareillage de la figure 1 ;
- la figure 7 est une vue schématique en perspective éclatée du bornier de connexion de la figure 5 ;
- la figure 8 est une vue schématique en coupe du mécanisme d'appareillage de la figure 1 enfiché dans le bornier de connexion de la figure 5 ;
- la figure 9 est une vue schématique en perspective arrière du principe de connexion électrique du mécanisme d'appareillage de la figure 1 via les bornes de connexion dudit mécanisme d'appareillage ;
- la figure 10 est une vue schématique en perspective arrière du principe de connexion électrique du mécanisme d'appareillage de la figure 1 via les broches de connexion dudit mécanisme d'appareillage ;
- la figure 11 est une vue schématique en perspective arrière d'un deuxième mode de réalisation d'un mécanisme d'appareillage conforme à l'invention ;
- la figure 12 est une vue schématique en perspective avant d'un support d'appareillage destiné à recevoir un des mécanismes d'appareillage conforme à l'invention ;
- la figure 13 est une vue schématique avant d'un appareillage électrique conforme à l'invention comprenant le mécanisme d'appareillage de la figure 11 ;
- la figure 14 est une vue schématique en perspective éclatée du mécanisme d'appareillage de la figure 11 ;
- la figure 15 est une vue schématique en perspective arrière d'un bornier de connexion dans lequel sont destinées à être enfichées les broches de connexion du mécanisme d'appareillage de la figure 11 ;
- la figure 16 est une vue schématique en perspective éclatée du bornier de connexion de la figure 15 ;
- la figure 17 est une vue schématique en perspective arrière du principe de connexion électrique de l'appareillage électrique de la figure 13 via les bornes de connexion du mécanisme d'appareillage ;
- la figure 18 est une vue schématique en perspective arrière du principe de connexion électrique de l'appareillage électrique de la figure 13 via le bornier

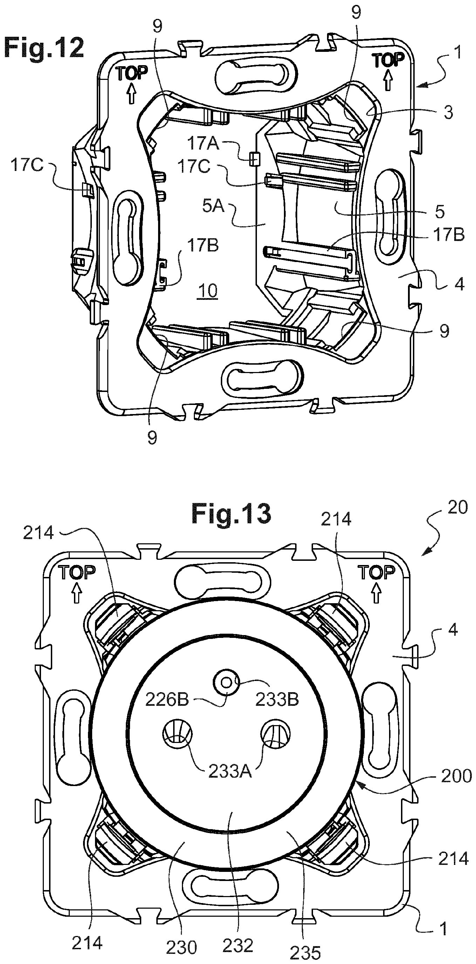

- la figure 12 est une vue schématique en perspective avant d'un support d'appareillage destiné à recevoir un des mécanismes d'appareillage conforme à l'invention ;

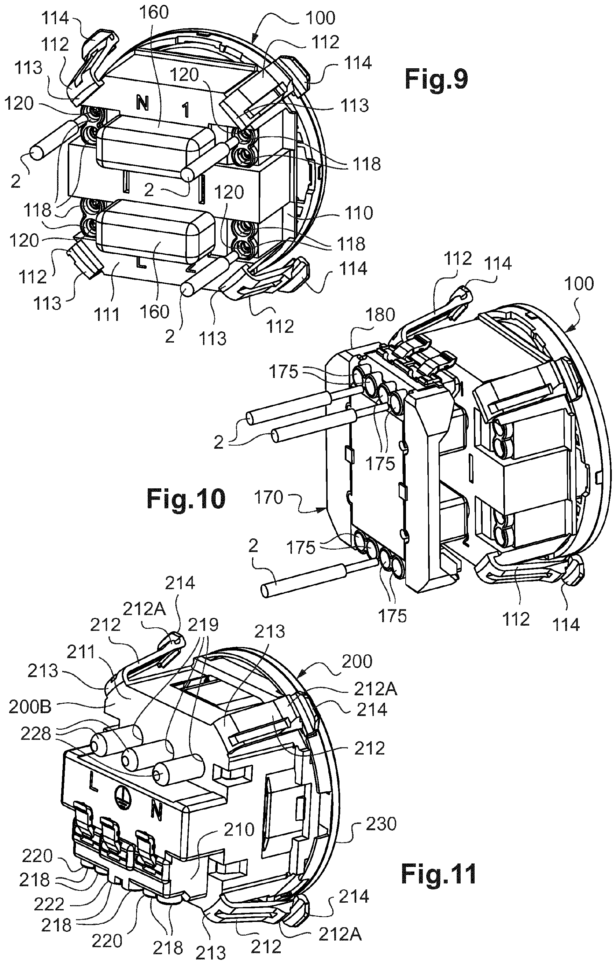

- la figure 13 est une vue schématique avant d'un appareillage électrique conforme à l'invention comprenant le mécanisme d'appareillage de la figure 11 ;

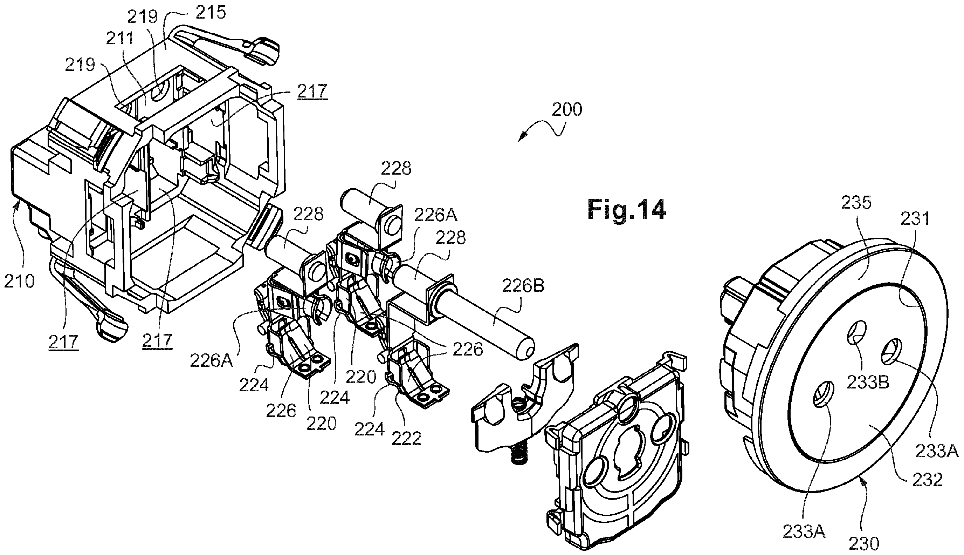

- la figure 14 est une vue schématique en perspective éclatée du mécanisme d'appareillage de la figure 11 ;

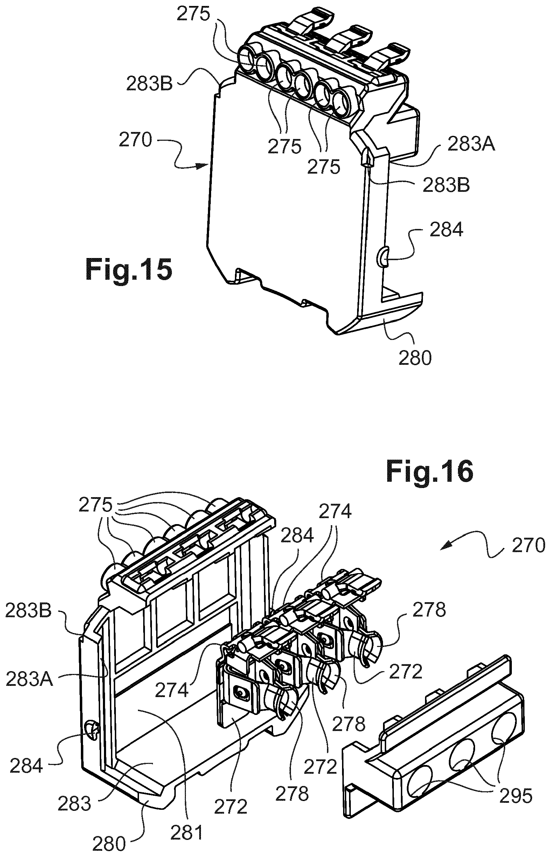

- la figure 15 est une vue schématique en perspective arrière d'un bornier de connexion dans lequel sont destinées à être enfichées les broches de connexion du mécanisme d'appareillage de la figure 11 ;
- la figure 16 est une vue schématique en perspective éclatée du bornier de connexion de la figure 15 ;

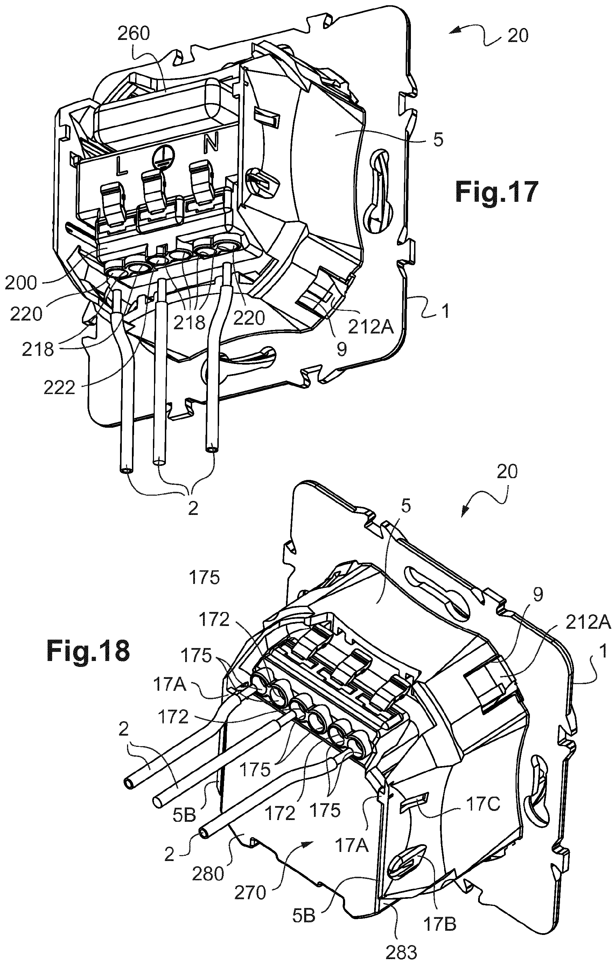

- la figure 17 est une vue schématique en perspective arrière du principe de connexion électrique de l'appareillage électrique de la figure 13 via les bornes de connexion du mécanisme d'appareillage ;
- la figure 18 est une vue schématique en perspective arrière du principe de connexion électrique de l'appareillage électrique de la figure 13 via le bornier de connexion de la figure 15 ;

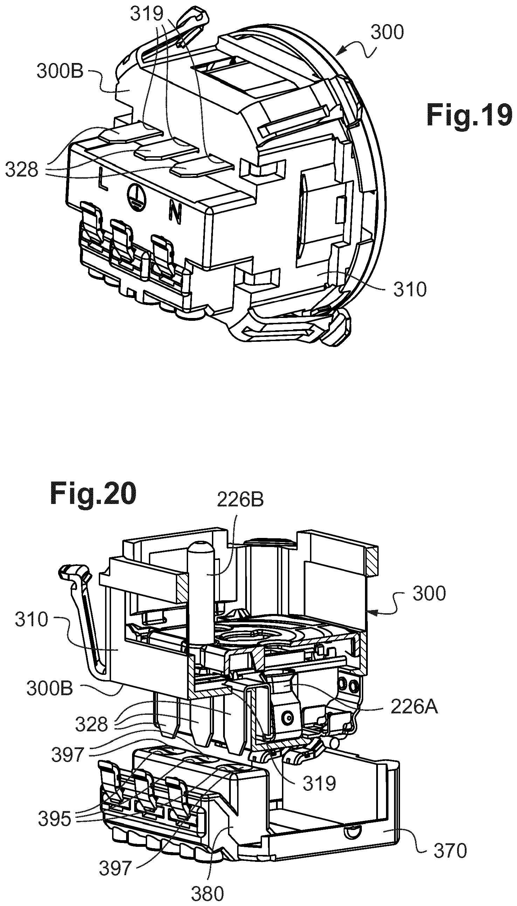

- la figure 19 est une vue schématique en perspective arrière d'un troisième mode de réalisation d'un mécanisme d'appareillage conforme à l'invention ;
- la figure 20 est une vue schématique en perspective latérale d'une coupe du mécanisme d'appareillage de la figure 19, dont les broches de connexion sont en position pour être enfichées dans un bornier de connexion ;

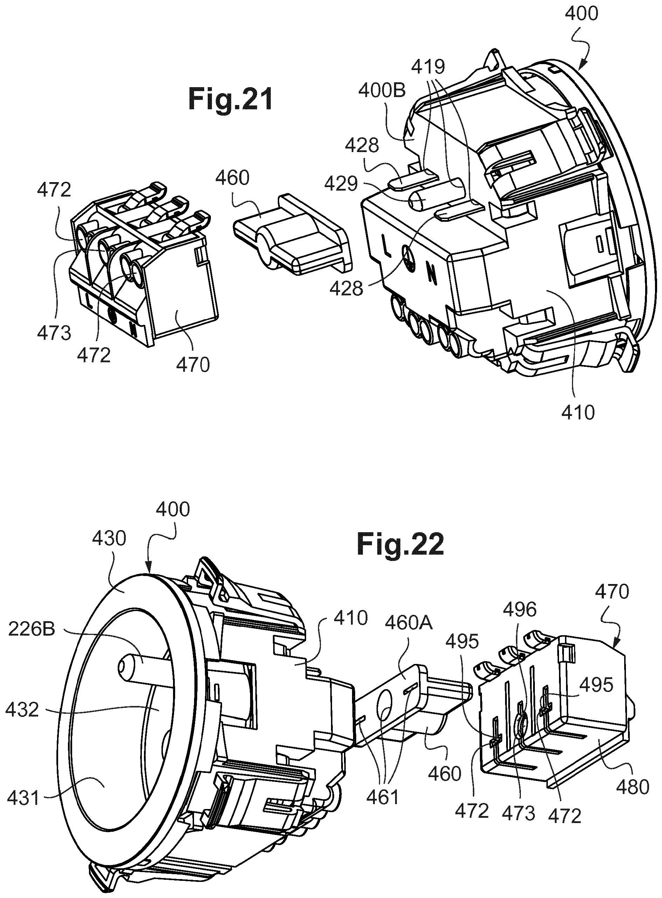

- la figure 21 est une vue schématique en perspective arrière d'un quatrième mode de réalisation d'un mécanisme d'appareillage conforme à l'invention, dont les broches de connexion sont en position pour être enfichées dans un capuchon isolant ou dans un bornier de connexion ; et,
- la figure 22 est une vue schématique en perspective avant du mécanisme d'appareillage de la figure 21.

Dans la suite de la description, les termes « avant » et « arrière » seront utilisés par rapport à la direction du regard de l'utilisateur tourné vers la paroi sur laquelle est rapporté l'appareillage électrique. Ainsi, l'avant d'un élément désignera le côté de cet élément qui est tourné vers l'utilisateur, et l'arrière désignera le côté opposé.

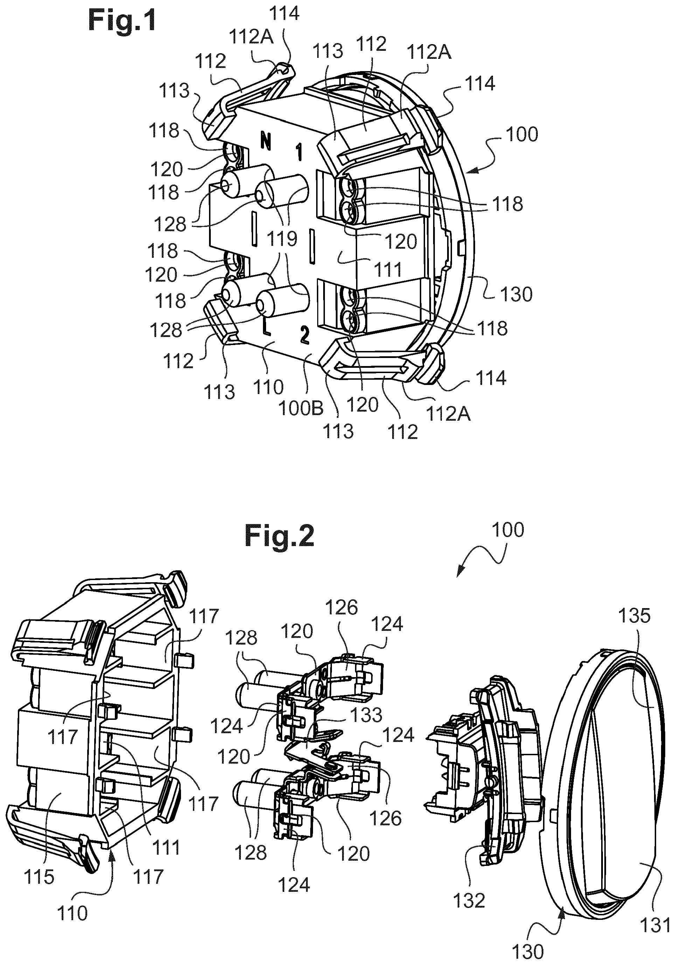

Sur les figures 1, 2, 8 à 10 ; 11, 14 ; 19, 20 ; et, 21, 22 on a représenté respectivement un premier, un deuxième, un troisième et un quatrième mode de réalisation d'un mécanisme d'appareillage 100; 200; 300; 400 conforme à l'invention. Le premier mode de réalisation du mécanisme d'appareillage est un interrupteur 100 (voir figure 2), tandis que les deuxième, troisième et quatrième modes de réalisation du mécanisme d'appareillage sont des prises de courant 200 ; 300 ; 400 (voir figures 14, 20 et 22).

Seuls les premier et deuxième modes de réalisation du mécanisme d'appareillages 100 ; 200 seront décrits en détails. Les troisième et quatrième modes de réalisation des prises de courant 300 ; 400 sont très semblables au deuxième mode de réalisation de la prise de courant 200 et seules leurs différences avec le deuxième mode de réalisation de la prise de courant 200 seront décrites.

Chaque mécanisme d'appareillage 100 ; 200 est destiné à être rapporté dans un support d'appareillage 1 tel que celui représenté sur la figure 12. Le mécanisme d'appareillage 100 ; 200 et le support d'appareillage 1 forment ensemble un appareillage électrique 20 (voir figures 13, 17 et 18) conforme à l'invention. Cet appareillage électrique 20 est destiné à être rapporté dans une boîte électrique (non représentée) elle-même, au choix, encastrée dans une paroi creuse, scellée dans une paroi maçonnée, ou rapportée en saillie d'une paroi quelconque.

Le mécanisme d'appareillage 100 ; 200 comprend, de manière générale, une partie fonctionnelle accessible depuis une face avant dudit mécanisme d'appareillage 100 ; 200, et une partie de connexion électrique, opposée à ladite partie fonctionnelle, et destinée à la connexion dudit mécanisme d'appareillage 100 ; 200 à un réseau électrique.

En particulier, comme le montrent les figures 1, 2, 11 et 14, le mécanisme d'appareillage 100 ; 200 comporte ici un socle 110 ; 210 en matériau isolant, logeant les composants électriques du mécanisme d'appareillage 100 ; 200 et notamment la partie de connexion électrique dudit mécanisme, ainsi qu'un enjoliveur 130 ; 230 donnant sa fonction électrique au mécanisme.

Plus précisément, comme le montrent les figures 2 et 14, le socle 110 ; 210 de chaque mécanisme d'appareillage 100 ; 200 comporte ici une paroi de fond 111 ; 211 à partir de laquelle s'élève une paroi latérale 115 ; 215, de manière à former un boîtier, ouvert à l'avant. Le socle 110 ; 210 est ici réalisé d'une seule pièce, en matière isolante, par exemple par moulage d'une matière plastique. L'enjoliveur 130 ; 230 est rapporté sur ce socle 110 ; 210 de manière à fermer, à l'avant, le boîtier formé par ledit socle 110 ; 210.

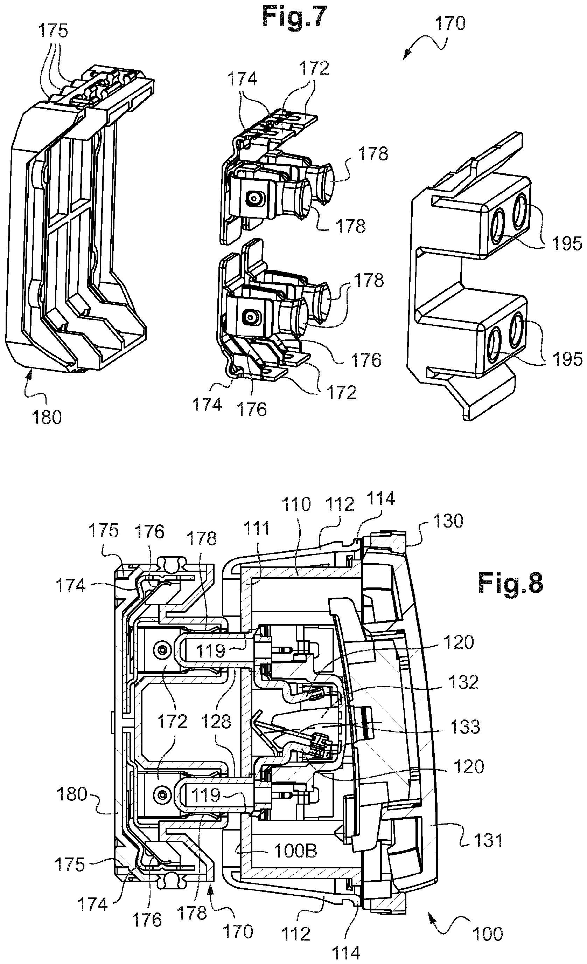

Comme le montrent les figures 2 et 8, l'enjoliveur 130 de l'interrupteur 100 comporte une touche d'interrupteur 131 agissant sur un mécanisme isolant 132 placé à l'arrière de ladite touche d'interrupteur 131 et destiné à agir sur un balai conducteur 133, via un ressort (non représenté) de manière à pouvoir déplacer ce balai conducteur 133 entre une première position dans laquelle il met en contact deux bornes de connexion 120 de l'interrupteur 100 (position fermée de l'interrupteur), et une deuxième position dans laquelle il met en contact deux autres bornes de connexion 120 dudit interrupteur 100 (position ouverte de l'interrupteur).

Comme le montrent les figures 13 et 14, l'enjoliveur 230 de la prise de courant 200 comporte un puits de réception 231 pour accueillir une fiche électrique. Ce puits de réception 231 est fermé, à l'avant, par un piston mobile 232 adapté à être repoussé vers l'arrière par l'insertion de la fiche électrique dans la prise de courant 200. En pratique, pour permettre le branchement de la fiche électrique dans la prise de courant 200, le piston mobile 232 du puits de réception 231 de l'enjoliveur 230 présente deux ouvertures de passage 233A débouchant dans des alvéoles de réception 226A d'une borne de phase et d'une borne de neutre 220 logées dans le socle 210 de la prise de courant 200, et une ouverture de passage 233B d'une broche de terre 226B reliée à une borne de terre 222 logée dans ledit socle 210, de sorte que cette broche de terre 226B fait saillie à l'intérieur du puits de réception 231. Chaque alvéole de réception 226A est délimité par deux languettes repliées l'une vers l'autre en formant deux épingles à cheveux. Ces deux languettes agissent comme la mâchoire d'une pince pour serrer la broche cylindrique de la fiche électrique introduite dans ledit alvéole de réception 226A. Les bornes de connexion 220, 222 de la prise de courant 200 sont ici conformes au standard franco-belge.

Comme le montre la figure 22, l'enjoliveur 430 du quatrième mode de réalisation de la prise de courant 400 est identique à l'enjoliveur 230 du deuxième mode de réalisation de la prise de courant 200 précédemment décrit si ce n'est qu'il ne comporte pas de piston mobile, mais une paroi de fond 432 fixe, percée des ouvertures donnant accès aux alvéoles de réception des bornes de connexion 220, et au travers de laquelle la broche de terre 226B émerge dans le puit de réception 431 perpendiculairement à ladite paroi de fond 432.

Comme le montrent bien les figures 1 et 11, la partie de connexion électrique du mécanisme d'appareillage 100 ; 200 est accessible depuis l'arrière du socle 110; 210 du mécanisme d'appareillage 100; 200. De manière remarquable, cette partie de connexion électrique comporte à la fois, au moins deux broches de connexion 128 ; 228 électrique faisant saillie d'une face arrière 100B ; 200B du socle 110 ; 210 du mécanisme d'appareillage 100 ; 200, et, au moins deux bornes de connexion électrique 120 ; 220, 222, chacune adaptée à recevoir un fil électrique provenant du réseau.

Comme le montrent les figures 2 et 14, chaque broche de connexion 128 ; 228 est reliée électriquement à une borne de connexion 120 ; 220, 222, de sorte que chaque paire de composants électriques « borne-broche » se trouve au même potentiel électrique lorsque l'un desdits deux composants électriques est alimenté électriquement.

Ici, comme le montrent plus particulièrement les figures 1, 2, 11 et 14, la partie de connexion électrique comprend autant de bornes de connexion 120 ; 220, 222 que de broches de connexion 128 ; 228.

Notamment, comme le montrent les figures 1 et 2, la partie de connexion électrique de l'interrupteur 100 comprend ici quatre bornes de connexion 120 identiques, dont une borne de phase repérée par le symbole « L », une borne de neutre repérée par le symbole « N » et deux autres bornes de navette repérées par les symboles « 1 » et « 2 ». Chacune de ces bornes de connexion 120 est reliée à une broche de connexion 128 distincte. Comme le montrent les figures 11 et 14, la partie de connexion électrique de la prise de courant 200 comprend quant à elle trois bornes de connexion 220, 222 : les deux bornes de phase et de neutre 220 identiques repérées respectivement par les symboles « L » et « N », portant chacune un des alvéoles de réception 226A de la prise de courant 200, et la borne de terre 222 repérée par le symbole de terre et portant la broche de terre 226B de la prise de courant 200. Comme le montre la figure 11, chaque borne de connexion 220, 222 est reliée à une broche de connexion 228 distincte.

Comme le montrent les figures 2 et 14, chaque borne de connexion 120 ; 220, 222 de l'un quelconque des mécanismes d'appareillage 100 ; 200 est logée isolément dans un compartiment 117 ; 217 ménagé dans le socle 110 ; 210 du mécanisme d'appareillage 100 ; 200. Les bornes de connexion 120 ; 220, 222 sont ici des bornes automatiques comportant une cage conductrice 124 ; 224 munie d'une lame ressort 126 ; 226 pour recevoir et bloquer l'âme dénudée du fil d'alimentation électrique provenant du réseau.

Comme le montrent bien les figures 1 et 9 d'une part, et les figures 11 et 17 d'autre part, le socle 110 ; 210 du mécanisme d'appareillage 100 ; 200 est, à l'arrière, percé d'ouvertures 118 ; 218 prévues pour donner accès, depuis l'extérieur du mécanisme d'appareillage 100 ; 200 aux bornes de connexion 120 ; 220, 222 logées dans les compartiments 117 ; 217. Ici il est plus précisément prévu une paire d'ouvertures 118; 218, de forme circulaire, pour accéder à chaque compartiment 117 ; 217.

Comme le montrent les figures 1, 8, 11 et 14, chaque broche de connexion 128 ; 228 traverse la paroi de fond 111 ; 211 du socle 100 ; 210 du mécanisme d'appareillage 100 ; 200 via une ouverture 119 ; 219 dédiée de manière à faire saillie de la face arrière 100B ; 200B du socle 110 ; 210, globalement orthogonalement à cette face arrière 100B ; 200B.

Les quatre broches de connexion 128 de l'interrupteur 100 sont de forme cylindrique, alignées deux à deux sur deux lignes parallèles et traversent le socle 110 via quatre ouvertures 119 circulaires (voir figure 1). Les trois broches de connexion 228 du mécanisme de prise de courant 200 sont de forme cylindrique, alignées, et traversent le socle 210 via trois ouvertures 219 circulaires (voir figure 11). Les trois broches de connexion 328 de la prise de courant 300 sont plates, alignées, et traversent le socle 310 via trois ouvertures 319 en fente (voir figures 19 et 20). Les deux broches de phase et de neutre 428 de la prise de courant 400 sont plates et traversent le socle 410 via deux ouvertures 419 en fente, et la broche de terre 429 de cette prise de courant 400 alignée avec les broches de phase et de neutre, est cylindrique et traverse le socle via une ouverture 419 centrale circulaire (voir figure 21).

Ainsi, la partie de connexion électrique du mécanisme d'appareillage 100 ; 200 ; 300 ; 400 selon l'invention présente un double système de connexion qui laisse le choix à l'utilisateur de connecter le mécanisme d'appareillage 100 ; 200 ; 300 ; 400 au réseau électrique soit de manière classique, en connectant les fils électriques 2 du réseau directement dans les bornes de connexion 120 ; 220, 222 (voir figures 9 et 17), soit de manière simple et sécurisée en enfichant les broches de connexion 128 ; 228 ;328 ; 428, 429 dans un bornier de connexion 170 ; 270 ; 370 ; 470 alors lui-même connecté aux fils électriques 2 du réseau (voir figures 10 et 18).

De manière avantageuse, le mécanisme d'appareillage 100 ; 200 selon l'invention comporte en outre un capot 160, 170 ; 260, 270 dans lequel sont enfichées les broches de connexion 128 ; 228, selon le système de connexion retenu pour le mécanisme d'appareillage 100 ; 200.

Plus précisément, ce capot prend :
- soit la forme d'un capuchon isolant 160, 260 recouvrant les broches de connexion 128 ; 228 de manière à les isoler lorsqu'elles ne sont pas utilisées pour connecter le mécanisme d'appareillage 100; 200 au réseau électrique (voir figures 9 et 17),
- soit la forme du bornier de connexion 170 ; 270, dans lequel sont insérées les broches de connexion 128 ; 228 pour connecter le mécanisme d'appareillage 100 ; 200 au réseau électrique de manière simple et sécurisée (voir figures 10 et 18).

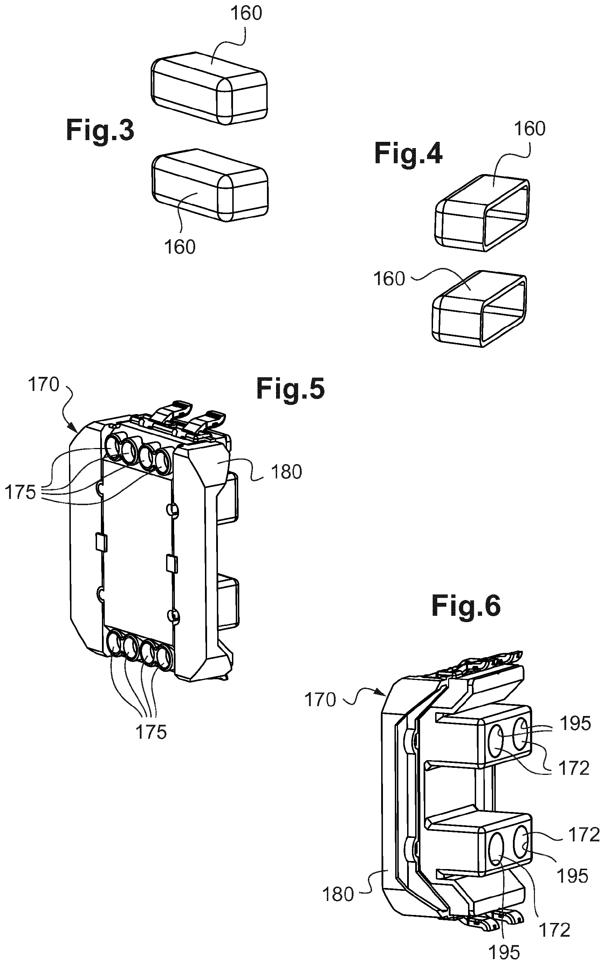

Comme le montrent les figures 3, 4 et 17, le capuchon isolant 160 ; 260 est formé d'une seule pièce en matériau isolant, par exemple par moulage d'une matière plastique. Il présente une forme globalement parallélépipédique. Il présente un logement intérieur entièrement clos, à l'exception d'une ouverture via laquelle les broches de connexion 128 ; 228 peuvent être insérées dans ledit capuchon isolant 160 ; 260. Selon une variante non représenté, on pourrait prévoir que ce logement intérieur soit compartimenté en compartiments logeant chaque broche de connexion de manière isolée.

Comme le montrent la figure 9, il est prévu d'insérer les deux broches de connexion 128 de l'interrupteur 100 d'une même ligne dans un premier capuchon isolant 160, et les deux broches de connexion 128 de l'autre ligne dans un deuxième capuchon isolant 160 identique au premier. Comme le montre la figure 17, il est prévu d'insérer les trois broches de connexion 128 de la prise de courant 200 dans un capuchon isolant 260 unique très semblable au capuchon isolant 160, mais légèrement plus long pour pouvoir accueillir les trois broches de connexion 228. Le capuchon isolant du troisième mode de réalisation de la prise de courant 300 (non représenté) est identique au capuchon isolant 260 de la prise de courant 200. Comme le montre la figure 22, le capuchon isolant 460 du quatrième mode de réalisation de la prise de courant 400 présente une face avant 460A fermée, à l'exception de trois ouvertures 461 de forme correspondante à celle des broches de connexion 428, 429 faisant saillie du socle 410.

Le bornier de connexion 170 ; 270, utilisé pour la connexion du type « plug and play » par simple enfichage de broches du mécanisme d'appareillage 100 ; 200 au réseau électrique, loge quant à lui au moins deux bornes de connexion 172 ; 272 électrique, chacune destinée à recevoir, outre ladite broche de connexion 128 ; 228 du mécanisme d'appareillage 100 ; 200, l'âme dénudée d'un des fils électriques 2 provenant du réseau.

Plus précisément, comme le montrent les figures 6, 7 et 16, le bornier de connexion 170; 270 comporte une enveloppe isolante 180; 280 logeant, de manière isolée les unes des autres, autant de bornes de connexion 172 ; 272 que le mécanisme d'appareillage 100 ; 200 comporte de broches de connexion 128 ; 228 faisant saillie de la face arrière 100B ; 200B de son socle 110 ; 210.

Ainsi, le bornier de connexion 170 destiné à connecter l'interrupteur 100 au réseau électrique comporte quatre bornes de connexion 172 (figures 6 et 7), tandis que le bornier de connexion 270 destiné à connecter la prise de courant 200 au réseau électrique comporte trois bornes de connexion 272 (figure 16).

Comme le montrent les figures 7, 8 et 16, chaque borne de connexion 172 ; 272 du bornier de connexion 170 ; 270 comprend, d'une part, un alvéole de réception 178; 278 destiné à recevoir la broche 128; 228 faisant saillie du mécanisme d'appareillage 100 ; 200, et, d'autre part, une cage conductrice 174 : 274 munie d'une lame ressort 176 pour recevoir et bloquer l'âme dénudée du fil électrique 2 alimentant la borne de connexion 170 ; 270. Chaque alvéole de réception 178 ; 278 est délimité par deux languettes repliées l'une vers l'autre en formant deux épingles à cheveux. ces deux languettes agissent comme la mâchoire d'une pince pour serrer la broche de connexion cylindrique introduite dans ledit alvéole de réception 178 ; 278. Les bornes de connexion du bornier de connexion 370 du troisième mode de réalisation de la prise de courant comportent des alvéoles de réception en forme de lyres (non visible)pour recevoir les broches de connexion 328 plates de cette prise de courant 300 (voir figures 19 et 20). Il en va de même des deux bornes de connexion de phase et de neutre 472 du bornier de connexion 470 du quatrième mode de réalisation de la prise de courant 400, destinées à recevoir les broches de connexion 428 plates de la prise de courant 400 (voir figure 21).

En variante, les alvéoles de réception des bornes de connexion du bornier de connexion peuvent être prévus pour recevoir indifféremment des broches de connexion de forme cylindrique ou plate.

Comme le montrent les figures 5, 6, 15 et 16, en correspondance avec chaque borne de connexion 172 ; 272, il est prévu dans l'enveloppe isolante 180 ; 280 du bornier de connexion 170 ; 270, d'une part, à l'arrière, au moins un orifice 175 ; 275 d'entrée permettant d'introduire l'âme dénudée de chaque fil d'alimentation électrique provenant du réseau, dans la cage conductrice de la borne de connexion 172 ; 272, et, d'autre part, à l'avant, une ouverture de passage 195 ; 295 permettant l'introduction de la broche de connexion 128 ; 228 correspondante du mécanisme d'appareillage 100 ; 200 jusque dans l'alvéole de réception de ladite borne de connexion 172 ; 272.

Plus précisément, comme le montrent les figures 5, 10, 15, et 18, l'enveloppe isolante 180 ; 280 du bornier de connexion 170 ; 270 comporte deux orifices 175 ; 275 d'entrée, ici de forme circulaire, au niveau de chaque borne de connexion 172 ; 272, l'un servant à l'alimentation de la borne de connexion par le fil d'alimentation électrique 2 provenant du réseau, l'autre à un éventuel repiquage de la borne de connexion 172 ; 272.

La forme et la disposition des ouvertures de passage 195 ; 295 prévues dans l'enveloppe isolante 180 ; 280 sont adaptées à la forme et à la position des broches de connexion 128 ; 228 du mécanisme d'appareillage 100 ; 200. Ainsi, l'enveloppe isolante 180 du bornier de connexion 170 de l'interrupteur 100 comprend quatre ouvertures de passage 195, de forme circulaire, deux à deux alignées (voir figures 6 et 7), tandis que l'enveloppe isolante 280 du bornier de connexion 270 de la prise de courant 200 comprend trois ouvertures de passage 295 de forme circulaire alignées (voir figure 16). Les ouvertures de passage 395 de l'enveloppe isolante 380 du bornier de connexion 370 du troisième mode de réalisation de la prise de courant 300 sont identiques à celles du bornier de connexion 270 du deuxième mode de réalisation de la prise de courant 200, mais elles sont bouchées par des membranes souples 397, ce qui augmente la sécurité de l'utilisateur en interdisant l'accès aux bornes de connexion dudit bornier de connexion 370. La membrane souple 397 est adaptée à se déchirer au passage de la broche de connexion lorsqu'elle est insérée dans la borne de connexion correspondante (voir figure 20). Lors du retrait de la broche de connexion, la membrane souple reprend, grâce à son élasticité, sa position de manière à boucher à nouveau l'ouverture de passage 395. La membrane souple 397 conserve néanmoins en son centre une fente liée à son déchirement initial (voir figure 20). Une telle membrane souple est par exemple réalisée en matière élastique telle que le SEBS. Les trois ouvertures de passage 495, 496 de l'enveloppe isolante 480 du bornier de connexion 470 du quatrième mode de réalisation de la prise de courant 400 sont alignées. Les deux ouvertures 495 d'extrémité, débouchant dans les alvéoles de réception en forme de lyre des bornes de neutre et de phase 472 sont en forme de fente tandis que l'ouverture 496 centrale, débouchant dans la borne de terre 473, est circulaire (voir figure 22).

De manière avantageuse, dans le deuxième mode de réalisation de la prise de courant 200, le bornier de connexion 270 est conçu pour interdire l'accès aux bornes de connexion 220, 222 de la partie de connexion électrique de la prise de courant 200. Plus précisément, comme le montre la figure 16, l'enveloppe isolante 280 du bornier de connexion 270 de la prise de courant 200 comporte un montant latéral 283 destiné à empêcher l'accès aux bornes de connexion 220, 222 de la prise de courant 200. Ainsi, comme le montre la figure 18, lorsque les broches de connexion 228 de la prise de courant 200 sont enfichées dans les bornes de connexion 272 du bornier de connexion 270, le montant latéral 283 de l'enveloppe isolante 280 dudit bornier de connexion 270 est positionné devant les ouvertures 218 du socle 210 de la prise de courant 200 de sorte que ce montant latéral 283 empêche toute connexion de fils électriques dans les bornes de connexion 220, 222 de la prise de courant 200. Cela renforce la sécurité de l'utilisateur qui ne peut donc pas utiliser les deux systèmes de connexion, bornes et broches de connexion 220, 222, 228, de la prise de courant 200 de manière simultanée.

En général, le mécanisme d'appareillage 100 ; 200 est enfiché dans le capot 160, 170; 260, 270 adapté au système de connexion retenu pour la connexion dudit mécanisme d'appareillage 100 ; 200 au réseau électrique, avant d'être rapporté sur le support d'appareillage 1.

Ainsi, lorsque la connexion classique est retenue (voir figures 9 et 17), les broches de connexion 128 ; 228 du mécanisme d'appareillage 100 ; 200 sont enfichées dans le capuchon isolant 160 ; 260 et les fils d'alimentation électrique 2 provenant du réseau sont introduits dans les cages conductrices 124 ; 224 des bornes de connexion 120 ; 220, 222 logées dans le socle 110 ; 210 du mécanisme d'appareillage 100 ; 200, via les ouvertures 118 ; 218 prévues dans ledit socle 110 ; 210. Au contraire, lorsque la connexion simple et sécurisée est retenue (voir figures 8, 10 et 18), les broches de connexion 128 ; 228 du mécanisme d'appareillage 100 ; 200 sont enfichées dans les alvéoles de réception 178 ; 278 des bornes de connexion 172 ; 272 logées dans le bornier de connexion 170 ; 270, via les ouvertures 195 ; 295 prévues à l'avant de l'enveloppe isolante 180 ; 280 dudit bornier de connexion 170 ; 270 et les fils d'alimentation électriques 2 provenant du réseau sont introduits dans les cages conductrices 174 ; 274 des bornes de connexion 172 ; 272 logées dans le bornier de connexion 170 ; 270, via les orifices 175 ; 275 d'entrée prévues à l'arrière de l'enveloppe isolante du bornier de connexion 170 ; 270.

Le mécanisme d'appareillage 100 ; 200 est ensuite fixé de manière amovible dans le support d'appareillage 1. Pour ce faire, le socle 110 ; 210 du mécanisme d'appareillage 100 ; 200 comporte des moyens de fixation au support d'appareillage 1, ici sous forme de moyens d'encliquetage. Ces moyens d'encliquetage sont terminées par des moyens de manœuvre, accessibles depuis la face avant du mécanisme d'appareillage 100 ; 200, qui les rendent amovibles.

Plus précisément, comme le montrent les figures 1, 9 et 11, les moyens d'encliquetage du socle 110 ; 210 du mécanisme d'appareillage 100 ; 200 comprennent quatre pattes flexibles 112 ; 212, deux à deux diamétralement opposées. Chaque patte flexible 112 ; 212 s'étend à partir de la paroi de fond 111 ; 211 du socle 110 ; 210, vers l'avant et globalement à l'extérieur dudit socle 110 ; 210. Le pied arrière de chaque patte flexible 112 ; 212 est terminée par une charnière 113 ; 213 reliant ladite patte flexible 112 ; 212 à la paroi de fond 111 ; 211 du socle 110 ; 210. La charnière 113 ; 213 est ici d'une seule pièce avec la paroi de fond 111 ; 211 et la patte flexible 112 ; 212. L'extrémité avant libre de chaque patte flexible 112, 212 est terminée par le moyen de manœuvre, ici sous forme d'une languette de préhension 114 ; 214 accessible à proximité de l'enjoliveur 130 ; 230, légèrement en retrait de la face avant dudit enjoliveur 130 ; 230 (voir figures 8 et 10).

Comme le montrent les figures 1 et 11, la face externe de chaque patte flexible 112 ; 212 porte une dent de fixation 112A ; 212A destinée à s'encliqueter dans une fenêtre 9 correspondante prévue dans le support d'appareillage 1 (voir figure 12). Chaque dent de fixation 112A ; 212A comporte, à l'avant, une surface d'accroche orthogonale à la direction d'insertion du mécanisme d'appareillage 100 ; 200 dans le support d'appareillage 1, et, à l'arrière, une surface inclinée facilitant l'insertion du socle 110 ; 210 du mécanisme d'appareillage 100 ; 200 dans le support d'appareillage 1.

Comme le montre la figure 12, le support d'appareillage 1 comporte ici, d'une part, un cadre 4 défini entre un bord externe et un bord interne délimitant une ouverture de montage 3 du mécanisme d'appareillage 100 ; 200, et, d'autre part, une paroi latérale 5 qui borde l'ouverture de montage 3 en prolongeant le cadre vers l'arrière pour former un logement de réception 10 du socle 110 ; 210 du mécanisme d'appareillage 100 ; 200.

Le socle 110 ; 210 du mécanisme d'appareillage 100 ; 200 est introduit dans le support d'appareillage 1, via ladite ouverture de montage 3. Ce faisant, la surface inclinée à l'arrière des dents de fixation 112A ; 212A des pattes flexible 112 ; 212 du socle 110 ; 210 du mécanisme d'appareillage 100 ; 200, en contact avec le bord interne du cadre 4 du support d'appareillage 1, repousse les pattes flexibles 112 ; 212 vers le centre du mécanisme d'appareillage 100 ; 200. La position finale du socle 110 ; 210 dudit mécanisme d'appareillage 100 ; 200 dans le support d'appareillage 1 est annoncée par un « clic » sonore indiquant que la dent de fixation 112A ; 212A de chaque patte flexible 112 ; 212 a rencontré la fenêtre 9 correspondante prévue dans la paroi latérale 5 du support d'appareillage 1, la patte flexible 112 ; 212 portant cette dent de fixation 112A ; 212A étant ainsi revenue élastiquement à sa position de repos.

Dans cette position finale du socle 110 ; 210, la partie façade 135 ; 235 décorative de l'enjoliveur 130 ; 230 du mécanisme d'appareillage 100 ; 200 s'appuie contre la face avant du cadre 4 du support d'appareillage 1 et forme un moyen de retenue dudit mécanisme d'appareillage 100 ; 200 vers l'arrière (voir figure 13), qui empêche le mécanisme d'appareillage 100 ; 200 de s'enfoncer plus loin dans le support d'appareillage 1, y compris lors de l'utilisation du mécanisme d'appareillage 100 ; 200, par exemple lors de l'insertion d'une fiche électrique dans la prise de courant 200. Dans cette positon finale du socle 110 ; 210, la surface d'accroche de chaque dent de fixation 112A ; 212A est parallèle à la face arrière du cadre du support d'appareillage 1, perpendiculaire à la direction de retrait du socle 110 ; 210 hors du support d'appareillage 1 (voir figures 17 et 18). La dent de fixation 112A ; 212A forme ainsi un moyen de retenue du mécanisme d'appareillage 100 ; 200 vers l'avant qui rend impossible la désolidarisation du support d'appareillage 1 et du mécanisme d'appareillage 100 ; 200, en condition normale d'utilisation de l'appareillage électrique 20, par exemple lorsque la fiche électrique est retirée de la prise de courant 200.

La languette de préhension 114 ; 214 du mécanisme d'appareillage 100 ; 200 rend ledit mécanisme retirable du support d'appareillage 1 par action volontaire de l'utilisateur. La languette de préhension 214 de chaque patte flexible 212 est accessible à proximité de l'ouverture de montage 3 du support d'appareillage 1 (voir figure 13). Lorsqu'un utilisateur désire retirer la prise de courant 200 reçu dans le support d'appareillage 1, il lui suffit de rapprocher les pattes flexibles 212 diamétralement opposées l'une vers l'autre, en pinçant les languettes de préhension 214 vers le centre de la prise de courant 200. Cela a pour effet de libérer les dents de fixation 212A des fenêtres 9 du support d'appareillage 1, de sorte qu'il est possible de tirer vers l'avant pour extraire la prise de courant 200 dudit support d'appareillage 1. Cela est bien entendu valable aussi pour l'interrupteur 100.

De manière avantageuse, dans le deuxième mode de réalisation de la prise de courant 200, le bornier de connexion 270 reste solidarisé au support d'appareillage 1, de manière autonome, lorsque la prise de courant 200 est retirée dudit support d'appareillage 1.

Le bornier de connexion 270 ferme alors, à l'arrière, le support d'appareillage 1 (voir figure 18). Plus précisément, la paroi de fond 281 de l'enveloppe isolante 280 du bornier de connexion 270 (voir figure 16) forme une paroi de fond du support d'appareillage 1, opposée à l'ouverture de montage 3, et le montant latéral 283 de cette enveloppe isolante 280 (voir figure 16) prolonge vers l'arrière la paroi latérale 5 du support d'appareillage 1, de sorte que le logement de réception 10 du socle 110 ; 210 du mécanisme d'appareillage est fermé par l'arrière. Le bornier de connexion 270 ainsi fixé sur le support d'appareillage 1 améliore la sécurité de l'utilisateur puisqu'il interdit l'accès aux fils de connexion électriques situés derrière le support d'appareillage 1, y compris lorsque le mécanisme d'appareillage est retiré du support d'appareillage 1.

Pour sa fixation autonome au support d'appareillage 1, le bornier de connexion 270 comprend des moyens d'assujettissement destinés à coopérer avec des moyens d'assujettissement complémentaires du support d'appareillage 1.

Comme cela est représenté sur les figures 15 et 16, il est prévu à l'arrière de l'enveloppe isolante 280 du bornier de connexion 270 de la prise de courant 200, deux encoches 283B, chacune destinée à recevoir une patte de butée 17A correspondante du support d'appareillage 1 (voir figure 17) s'étendant à partir du bord arrière 5B de la paroi latérale 5 dudit support d'appareillage 1, en saillie vers l'intérieur du logement de réception 10. Les pattes de butée 17A du support d'appareillage 1 et les encoches 283B du bornier de connexion 270 forment ainsi un moyen de retenue vers l'arrière dudit bornier de connexion 270.

Le support d'appareillage 1 comporte par ailleurs deux languettes flexibles 17C (voir figures 12 et 18) s'étendant à partir de la paroi latérale 5, en saillie vers l'intérieur du logement de réception 10, adaptées à s'écarter hors du logement de réception 10 au passage du bornier de connexion 270. Ces languettes flexibles 17C sont destinées à s'appuyer contre un bord avant 283A (voir figures 15 et 16) de l'enveloppe isolante 280 dudit bornier de connexion 270 lorsque ce dernier est en buté contre les pattes de butée 17A du support d'appareillage 1. Les languettes flexibles 17C du support d'appareillage 1 et le bord avant 283A du bornier de connexion 270 forment ainsi un moyen de retenue vers l'avant dudit bornier de connexion 270.

Enfin, il est prévu en saillie de deux portions latérales opposées de l'enveloppe isolante 280 du bornier de connexion 270, un pion 284 (voir figures 15 et 16) destiné à s'engager dans une coulisse 17B correspondante du support d'appareillage 1 (voir figures 12 et 18) prévue le long d'une face interne 5A de la paroi latérale 5 dudit support d'appareillage 1. Les deux pions 284 permettent d'orienter et de guider le montage du bornier de connexion 270 enfiché sur la prise de courant 200, jusqu'au fond du logement de réception 10 du support d'appareillage 1. Ils garantissent que les pattes de butée 17A et les languettes flexibles 17C du support d'appareillage 1 agissent à l'endroit approprié de l'enveloppe isolante 280 du bornier de connexion 270 pour la prendre en sandwich. En outre, les deux pions 284 du bornier de connexion 284 en butée au fond de la coulisse 17B du support d'appareillage 1 forment un autre moyen de retenue vers l'arrière du bornier de connexion 270.

L'invention n'est nullement limitée aux modes de réalisation décrits et représentés. Notamment, il est envisageable que le mécanisme d'appareillage soit un mécanisme d'interrupteur double, de va-et-vient, de détecteur, de prise USB.

## Revendications

1. Mécanisme d'appareillage (100; 200; 300; 400) électrique comportant une partie fonctionnelle accessible depuis une face avant dudit mécanisme d'appareillage, et une partie de connexion électrique opposée à ladite partie fonctionnelle et destinée à la connexion dudit mécanisme d'appareillage (100 ; 200 ; 300 ; 400) à un réseau électrique, dans lequel ladite partie de connexion électrique comporte au moins deux broches de connexion (128 ; 228 ; 328 ; 428, 429) électrique faisant saillie d'une face arrière (100B ; 200B ; 300B ; 400B) dudit mécanisme d'appareillage (100 ; 200 ; 300 ; 400),
**caractérisé en ce que** ladite partie de connexion électrique présente un double système de connexion qui comporte lesdites broches de connexion (128 ; 228 ; 328 ; 428, 429) et en outre au moins deux bornes de connexion (120 ; 220, 222) électrique, chaque borne de connexion étant adaptée à recevoir un fil électrique provenant du réseau, ce double système de connexion laissant le choix à un utilisateur de connecter le mécanisme d'appareillage (100 ; 200 ; 300 ; 400) au réseau électrique soit en connectant les fils électriques du réseau dans les bornes de connexion (120 ; 220, 222), soit en enfichant les broches de connexion (128 ; 228 ; 328 ; 428, 429) dans un bornier de connexion (170 ; 270 ; 370 ; 470) connecté aux fils électriques du réseau, et
**en ce que** les bornes de connexion (120; 220, 222) sont des bornes automatiques comportant une cage conductrice (124; 224) munie d'une lame ressort (126; 226) pour recevoir et bloquer l'âme dénudée du fil d'alimentation électrique provenant du réseau.

2. Mécanisme d'appareillage (100 ; 200 ; 300 ; 400) selon la revendication 1, comportant en outre au moins un capot (160, 170 ; 260, 270 ; 360, 370 ; 460, 470) dans lequel sont enfichées lesdites broches de connexion (128 ; 228 ; 328 ; 428, 429).

3. Mécanisme d'appareillage (100; 200; 300; 400) selon la revendication 2, dans lequel ledit au moins un capot forme un capuchon en matériau isolant (160; 260; 360; 460) destiné à isoler lesdites broches de connexion (128 ; 228 ; 328 ; 428, 429) lorsque celles-ci sont inutilisées.

4. Mécanisme d'appareillage (100; 200; 300; 400) selon la revendication 2, dans lequel ledit au moins un capot forme le bornier de connexion (170 ; 270 ; 370 ; 470), ledit bornier de connexion (170 ; 270 ; 370 ; 470) logeant lui-même au moins deux bornes de connexion (172 ; 272 ; 372 ; 472), chacune destinée à recevoir, d'une part, une desdites broche de connexion (128 ; 228 ; 328 ; 428, 429), et, d'autre part, un des fils électriques provenant du réseau électrique.

5. Mécanisme d'appareillage (200 ; 300) selon la revendication 4, dans lequel le bornier de connexion (270 ; 370) interdit l'accès auxdites bornes de connexion (220, 222) de la partie de connexion électrique dudit mécanisme d'appareillage (200 ; 300).

6. Mécanisme d'appareillage (200) selon l'une des revendications 4 et 5, dans lequel le bornier de connexion (270) comprend des moyens d'assujettissement à un support d'appareillage (1) destiné à logé ledit mécanisme d'appareillage (200).

7. Mécanisme d'appareillage (100; 200; 300; 400) selon l'une des revendications 1 à 6, dans lequel la partie de connexion électrique comprend au moins autant de bornes de connexion (120; 220, 222) que de broches de connexion (128 ; 228 ; 328 ; 428, 429).

8. Mécanisme d'appareillage (100; 200; 300; 400) selon l'une des revendications 1 à 7, dans lequel il est prévu des moyens d'encliquetage (112, 112A ; 212, 212A) pour la fixation amovible dudit mécanisme d'appareillage (100 ; 200 ; 300 ; 400) à un support d'appareillage (1).

9. Mécanisme d'appareillage (100; 200; 300; 400) selon la revendication 8, dans lequel lesdits moyens d'encliquetage comprennent des moyens de manœuvre accessibles depuis la face avant dudit mécanisme d'appareillage (100 ; 200 ; 300 ; 400).

10. Appareillage électrique (20) comportant un mécanisme d'appareillage (100 ; 200 ; 300 ; 400) selon l'une des revendications 1 à 9 reçu dans un support d'appareillage (1).

11. Appareillage électrique (20) selon la revendication 10, dans lequel le mécanisme d'appareillage (100 ; 200 ; 300 ; 400) est reçu de manière amovible dans ledit support d'appareillage (1).

## Patentansprüche

1. Mechanismus (100; 200; 300; 400) eines elektrischen Geräts mit einem von einer Vorderseite des Gerätemechanismus zugänglichen Funktionsteil und einem vom Funktionsteil abgewandten und für eine elektrische Verbindung des Gerätemechanismus (100; 200; 300; 400) mit einem Stromnetz vorgesehenen Teil, bei dem der elektrische Verbindungsteil mindestens zwei Stifte (128; 228; 328; 428, 429) für eine elektrische Verbindung aufweist, die von einer Rückseite (100B; 200B; 300B; 400B) des Gerätemechanismus (100; 200; 300; 400) abstehen,
**dadurch gekennzeichnet, daß** der elektrische Verbindungsteil ein doppeltes Verbindungssystem aufweist, das die Verbindungsstifte (128; 228; 328; 428, 429) und außerdem mindestens zwei elektrische Verbindungsanschlüsse (120; 220, 222) aufweist, wobei jeder Verbindungsanschluß dazu ausgelegt ist, einen von dem Netz kommenden elektrischen Draht aufzunehmen, wobei das doppelte System einem Nutzer freistellt, den Gerätemechanismus (100; 200; 300; 400) entweder durch Anschließen der elektrischen Drähte des Netzes in den Verbindungsanschlüssen (120; 220, 222) oder durch Einstecken der Verbindungsstifte (128; 228; 328; 428, 429) in ein mit den elektrischen Drähten des Netzes verbundenes Anschlußklemmenelement (170; 270; 370; 470) mit dem Netz zu verbinden, und
daß die Verbindungsanschlüsse (120; 220, 222) automatische Anschlüsse sind, die einen mit einer Federklinge (126; 226) versehenen elektrisch leitenden Hohlraum (124; 224) zum Aufnehmen und Blockieren der abisolierten Seele des vom Netz kommenden elektrischen Versorgungsdrahts aufweist.

2. Gerätemechanismus (100; 200; 300; 400) gemäß Anspruch 1, der außerdem mindestens eine Haube (160, 170; 260, 270; 360, 370; 460, 470) aufweist, in die die Verbindungsstifte (128; 228; 328; 428, 429) eingesteckt sind.

3. Gerätemechanismus (100; 200; 300; 400) gemäß Anspruch 2, bei dem die mindestens eine Haube eine Abdeckkappe (160; 260; 360; 460) aus isolierendem Material bildet, die dazu bestimmt ist, die Verbindungsstifte (128; 228; 328; 428, 429) zu isolieren, wenn diese nicht benutzt werden.

4. Gerätemechanismus (100; 200; 300; 400) gemäß Anspruch 2, bei dem die mindestens eine Haube das Anschlußklemmenelement (170; 270; 370; 470) bildet, wobei das Anschlußklemmenelement (170; 270; 370; 470) selbst mindestens zwei Verbindungsanschlüsse (172; 272; 372; 472) aufnimmt, von denen jeder dazu bestimmt ist, einerseits die Verbindungsstifte (128; 228; 328; 428, 429) und andererseits einen der vom Netz kommenden elektrischen Drähte aufzunehmen.

5. Gerätemechanismus (200; 300) gemäß Anspruch 4, bei dem das Anschlußklemmenelement (270; 370) den Zugang zu den Verbindungsstiften (220, 222) des elektrischen Verbindungsteils des Gerätemechanismus (200; 300) sperrt.

6. Gerätemechanismus (200) gemäß einem der Ansprüche 4 und 5, bei dem das Anschlußklemmenelement (270) Mittel für eine Zwangsmontage an einem Geräteträger (1) aufweist, der dazu bestimmt ist, den Gerätemechanismus (200) aufzunehmen.

7. Gerätemechanismus (100; 200; 300; 400) gemäß einem der Ansprüche 1 bis 6, bei dem der elektrische Verbindungsteil mindestens genauso viele Verbindungsanschlüsse (120; 220, 222) wie Verbindungsstifte (128; 228; 328; 428, 429) aufweist.

8. Gerätemechanismus (100; 200; 300; 400) gemäß einem der Ansprüche 1 bis 7, bei dem Einrastmittel (112, 112A; 212, 212A) zum lösbaren Befestigen des Gerätemechanismus (100; 200; 300; 400) an einem Geräteträger (1) vorgesehen sind.

9. Gerätemechanismus (100; 200; 300; 400) gemäß Anspruch 8, bei dem die Einrastmittel Betätigungsmittel aufweisen, die von der Vorderseite des Gerätemechanismus (100; 200; 300; 400) her zugänglich sind.

10. Elektrisches Gerät (20) mit einem in einem Geräteträger (1) angeordneten Gerätemechanismus (100; 200; 300; 400) gemäß einem der Ansprüche 1 bis 9.

11. Elektrisches Gerät (20) gemäß Anspruch 10, bei dem der Gerätemechanismus (100; 200; 300; 400) in abnehmbarer Form im Geräteträger (1) angeordnet ist.

## Claims

1. An electrical accessory mechanism (100; 200; 300; 400) comprising both a functional portion accessible from a front face of said accessory mechanism and, opposite from said functional portion, an electrical connection portion for connecting said accessory mechanism (100; 200; 300; 400) to an electricity network, wherein said electrical connection portion includes at least two connection pins (128; 228; 328; 428, 429) projecting from a rear face (100B; 200B; 300B; 400B) of said accessory mechanism (100; 200; 300; 400); the mechanism being **characterized in that** said electrical connection portion presents a dual connection system including said connection pins (128; 228; 328; 428, 429) and also at least two electrical connection terminals (120; 220, 222), each electrical connection terminal being adapted to receive an electric wire coming from the network, the dual connection system leaving the user free to choose to connect the accessory mechanism (100; 200; 300; 400) to the electricity network either by connecting the electric wires of the network in the connection terminals (120; 220, 222) or else by plugging the connection pins (128; 228; 328; 428, 429) into a terminal block (170; 270; 370; 470) connected to the electric wires of the network, and **in that** the connection terminals (120; 220, 222) are automatic terminals comprising a conductive cage (124; 224) provided with a spring blade (126; 226) for receiving and holding the stripped core of the electric power supply wire coming from the network.

2. An accessory mechanism (100; 200; 300; 400) according to claim 1, further comprising at least one cover (160, 170; 260, 270; 360, 370; 460, 470) into which said connection pins (128; 228; 328; 428, 429) are plugged.

3. An accessory mechanism (100; 200; 300; 400) according to claim 2, wherein said at least one cover forms a cap made of insulating material (160; 260; 360; 460) for insulating said connection pins (128; 228; 328; 428, 429) when they are unused.

4. An accessory mechanism (100; 200; 300; 400) according to claim 2, wherein said at least one cover forms the terminal block (170; 270; 370; 470), said terminal block (170; 270; 370; 470) itself housing at least two connection terminals (172; 272; 372; 472), each of which is for receiving both one of said connection pins (128; 228; 328; 428, 429) and also one of the electric wires coming from the electricity network.

5. An accessory mechanism (200; 300) according to claim 4, wherein the terminal block (270; 370) prevents access to said connection terminals (220, 222) of the electrical connection portion of said accessory mechanism (200; 300) .

6. An accessory mechanism (200) according to claim 4 or claim 5, wherein the terminal block (270) includes fastener means for fastening to an accessory support (1) for housing said accessory mechanism (200).

7. An accessory mechanism (100; 200; 300; 400) according to any one of claims 1 to 6, wherein the electrical connection portion includes at least as many connection terminals (120; 220, 222) as connection pins (128; 228; 328; 428, 429).

8. An accessory mechanism (100; 200; 300; 400) according to any one of claims 1 to 7, wherein snap fastener means (112, 112A; 212, 212A) are provided for releasably fastening said accessory mechanism (100; 200; 300; 400) to an accessory support (1).

9. An accessory mechanism (100; 200; 300; 400) according to claim 8, wherein said snap fastener means include operating means that are accessible from the front face of said accessory mechanism (100; 200; 300; 400).

10. An electrical accessory (20) comprising an accessory mechanism (100; 200; 300; 400) according to any one of claims 1 to 9 received in an accessory support (1).

11. An electrical accessory (20) according to claim 10, wherein the accessory mechanism (100; 200; 300; 400) is releasably received in said accessory support (1).
